Europäisches Patentamt

European Patent Office

Office européen des brevets

(19)

(11) Publication number: **0 021 273**
**B1**

(12) **EUROPEAN PATENT SPECIFICATION**

(45) Date of publication of patent specification: **12.09.84**

(51) Int. Cl.³: **B 29 F 1/022**

(21) Application number: **80103295.4**

(22) Date of filing: **12.06.80**

(54) Injection mechanism for molding plastics.

(30) Priority: **12.06.79 NL 7904583**
**27.12.79 NL 7909313**

(43) Date of publication of application:
**07.01.81 Bulletin 81/01**

(45) Publication of the grant of the patent:
**12.09.84 Bulletin 84/37**

(84) Designated Contracting States:
**DE FR GB**

(56) References cited:
**DE-A-2 362 162**
**FR-A-2 276 161**
**FR-A-2 399 314**
**GB-A-2 037 647**
**US-A-2 878 515**
**US-A-3 037 245**
**US-A-3 553 788**
**US-A-3 716 318**
**US-A-4 053 271**

(73) Proprietor: **Schouenberg, Hendrikus Jacobus Elisabeth**
**Burg. Stolklaan 16**
**NL-4002 WJ Tiel (NL)**

(72) Inventor: **Schouenberg, Hendrikus Jacobus Elisabeth**
**Burg. Stolklaan 16**
**NL-4002 WJ Tiel (NL)**

(74) Representative: **Baumann, Eduard, Dipl.-Phys.**
**Postfach 1201 Sattlerstrasse 1**
**D-8011 Höhenkirchen/München (DE)**

(56) References cited:
**PLASTVERARBEITER, vol. 28, no. 6, 1977,**
**Speyer/Rhein, DE, W. HARTMANN:**
**"Heisskanalsystem mit Klemmdüsen zum**
**Glätten der Angussstellen an Spritzgussteilen",**
**pages 311-313**

Courier Press, Leamington Spa, England.

## Description

The invention relates to an injection mechanism according to the introductory portion of claim 1.

In injection molding arrangements for injection molding of products of plastics or other materials, these products are usually injected by way of a runner which is provided with a sprue. The injected products are then removed from this runner. If it is desirable to omit the runner, an arrangement is used with which it is possible to utilize runnerless injection molding.

In such an arrangement for runnerless injection molding of products, one or more injection nozzles are assembled to a heated distributor block, which is geometrically separated from the injection machine, and the molten plastics is flowing from the injection molding machine through radially extending distributor channels in the heated distributor block downward through the injection nozzles and by way of the injection aperture into the product cavity.

The products which are injection molded in this fashion may exhibit injection spots which can very negatively influence the function or the appearance of the products to be injection molded. In order to mold products which absolutely must not exhibit injection spots, needle valves must be utilized, which are installed in the injection nozzles respectively in the heated distributor block, these needle valves must be opened at the beginning of the injection into the cavity of the molten plastics and will close off the injection apertures in the product cavity after completion of the entire injection cycle.

The bottom point of each needle valve is forcibly driven into the conical injection aperture of the product cavity and, as is well known, the most critical function of such an arrangement lies in the injection aperture, where improper functioning can cause costly break down of the injection machine or imperfections in the molded product.

The lower apertures of the injection nozzle are separated from the cavity plate by an air space, which is filled with plastics and which provides a thermal insulation between the hot nozzles and the cold cavity plate.

In injection molding arrangements for the production particularly of products of small dimensions, this arrangement requires several injection nozzles. Until the present time the minimal center distances between individual needle valves are determined by their activating mechanism, each needle valve is activated separately and for this a certain minimal space is required. The center distances in the injection arrangement for small products to be injection molded is therefore entirely dependent on the minimal center distance which can be attained with separately activated needle valve mechanisms.

Until the present time injection nozzles for this purpose have been designed such that for each selection of the manner of injection or the injection aperture, a different injection nozzle is required.

The manners of injection can be among others, the so-called open nozzle, the nozzle provided with a fixed body in the injection aperture; the nozzles provided with a fixed, heated torpedo; a nozzle which is provided with a needle valve.

Up to the present, a conscious selection is also required concerning the application of the manner of injection, if the applicable injection nozzle is placed centrally in the injection mold or if the injection nozzle is used in a hot runner design.

Up to now, it is also necessary for the processing of certain types of plastics to make a conscious selection of the manner of injection, to commit to a certain type injection nozzle.

It is evident that many types of injection nozzles must be purchased, in most cases with different dimensions and matching heights, thus not universally interchangeable.

In injection molding arrangements for the production particularly of small products, this arrangement requires several injection nozzles. Up to the present time, the minimum center distances of the individual injection apertures are determined by the sizes of the injection nozzles to be used, resulting in a minimum distance.

An injection mechanism according to the introductory part of claim 1 is disclosed in Plastverarbeiter 28. Jahrgang 1977 Nr. 6, page 311 and 312. The needle valve is closed via a spring element. This does not work very reliably.
It is not possible to close and to open all needle valves exactly at the same time. Also an adjustment of the needle valve is not possible. A control of these valves is achieved via gliding elements which are pressed into the borings hydraulically or pneumatically. It is necessary to solve this control for opening the valves. For this reason it is not possible to open all valves at the same time or to adjust the needle valves. In addition it is not possible to seal a needle valve so perfect as by providing a bushing. The lower sealing quality does not allow very high molding pressures.

The British published patent application 2037647 A shows an injection molding valve beam actuator including a first and a second member which cooperates for closing and opening a couple of valves.

It is the object of the invention to avoid the disadvantages of the above-mentioned large variety of the injection nozzles to be used, and to facilitate very small center distances in an injection mechanism according to the introductory portion of claim 1.

The object of the invention is solved by the features of the characterizing clause of claim 1. Preferred embodiments of the invention are covered by the subclaims.

The invention provides an injection mechanism for molding plastics comprising at least one injection bushing, at least one lower needle valve, which is supplied by the injection bushing with molten plastics and opened by the pressure of the molten plastics during injection, further comprising heating means and cooling means adjacent to the flow path of the plastics, control means for maintaining the plastics at an adjusted temperature, further control means for injecting the molten plastics into at least one mold cavity via a corresponding injection aperture, and for the closing of the mold cavity after finishing the injection.

In one preferred example of the invention only one plunger is provided within a heated distributor block which actuates several needle valves, situated at different locations within the distributor block, for supplying the molten plastics to the mold cavity via one single injection bushing, an injection nozzle, and several lower injection openings.

To facilitate very small center distances, in one embodiment of the invention several needle valves are placed at very small center distances (minimum center distance is 3 mm) from each other in a single injection nozzle, which is provided with as many lower apertures as the injection nozzle contains needle valves. These needle valves are then activated by a plunger, which obtains a movement and in which the plunger has been placed in the heated distributor block to which the injection nozzle (9) is assembled.

In applying such an injection nozzle several products can be injection molded with a single injection nozzle or a single large product can be injection molded through a single injection nozzle in several places, the injection nozzle being provided with needle valves in both cases.

The main advantage of this new application is, in addition, that the needle valves are directly activated by a single plunger which is located in the heated distributor block and that this way a smaller dimension in height for assembly in an injection molding arrangement can be attained. The realization of this construction is such that this combination, plunger, needle valve, injection nozzle and heated distributor block, after assembly is one entity and can therefore be held within very close tolerances.

Another additional advantage of a preferred example is that in applying several injection nozzles, every plunger in the heated distributor block is activated and controlled separately from outside the injection molding arrangement, also during the injection molding process.

Because the design of the invention is realized and described in the claims, the important advantage is obtained that the needle valves can be exchanged or their axial positions can be adjusted, this latter case through the use of a spacer bushing underneath the head of the needle, without the necessity to disassemble the injection molding arrangement.

To simplify the assembly and disassembly of these needles the axially adjustable guide bushing in the plunger is prevented from rotating in that it is provided with one or more flat spots, which are in contact with one or more corresponding flats in the plunger.

In another embodiment of the invention small center distances of the locations, where injection occurs, through the use of a single injection nozzle, as described above, are achieved but without utilizing needle valves.

The described injection molding mechanism works 100% properly and maintenance-free.

Because the injection nozzle has several lower apertures which protrude with respect to it and since it is necessary to place the lower apertures as close as possible to each other, but because it is desirable to obtain a correct location of the lower apertures with respect to the points of injection in the cavity plates, a spacer and centering bushing is used, which correctly centers the injection nozzle as a whole in the cavity plate, so that the lower injection apertures are placed exactly opposite the points of injection.

In injection molding of certain types of plastics, e.g. polycarbonate, P.V.C., acetate, nylon, acrylics and other high value plastics, which have a narrow processing range as far as melting temperature is concerned, within which these are still easy to process, especially in the region of the lower apertures, it is necessary to keep the temperature constant and at the correct value in this region. This is mainly realized through the fabrication of the injection nozzle from a material with high heat conductivity, e.g. beryllium copper and through the heating of this by a cast-in, plastic-tight heater element, provided with a thermocouple, placed as close as possible to the lower aperture.

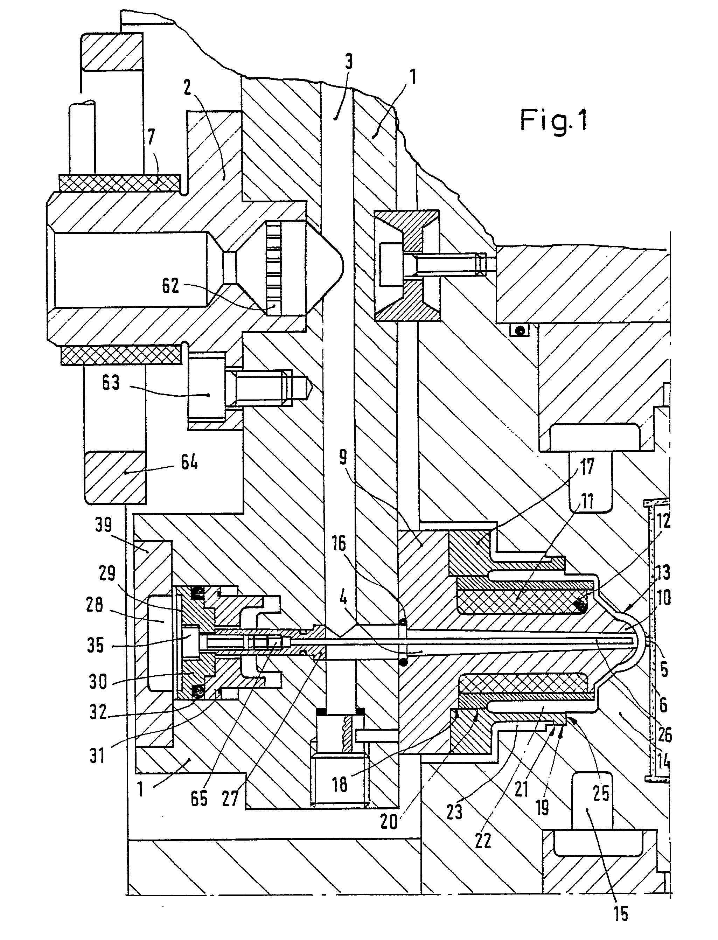

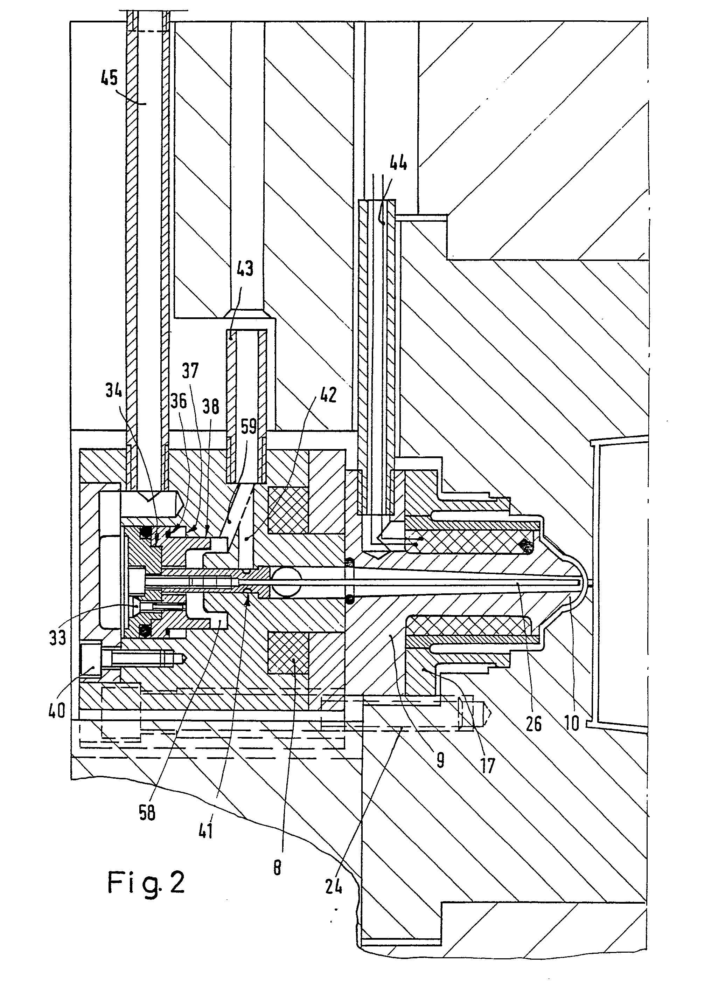

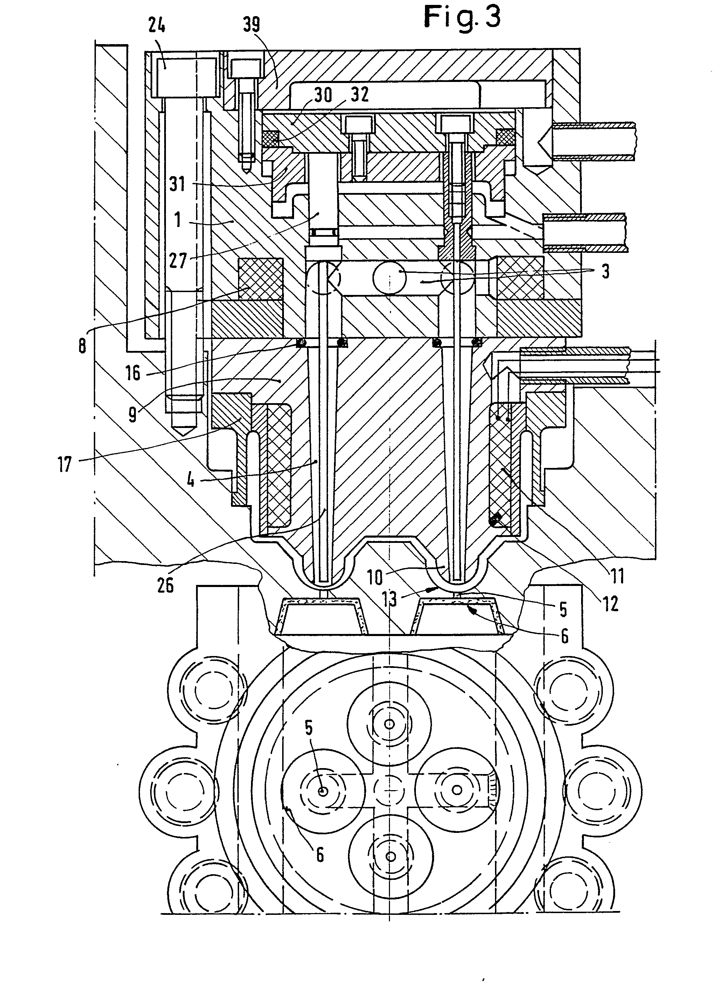

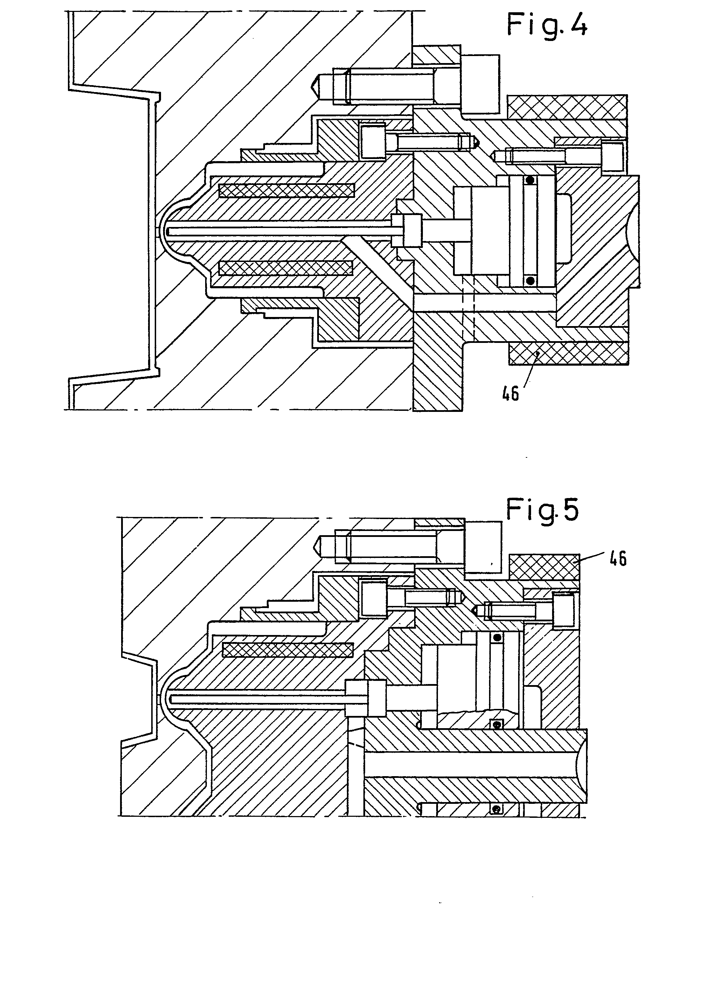

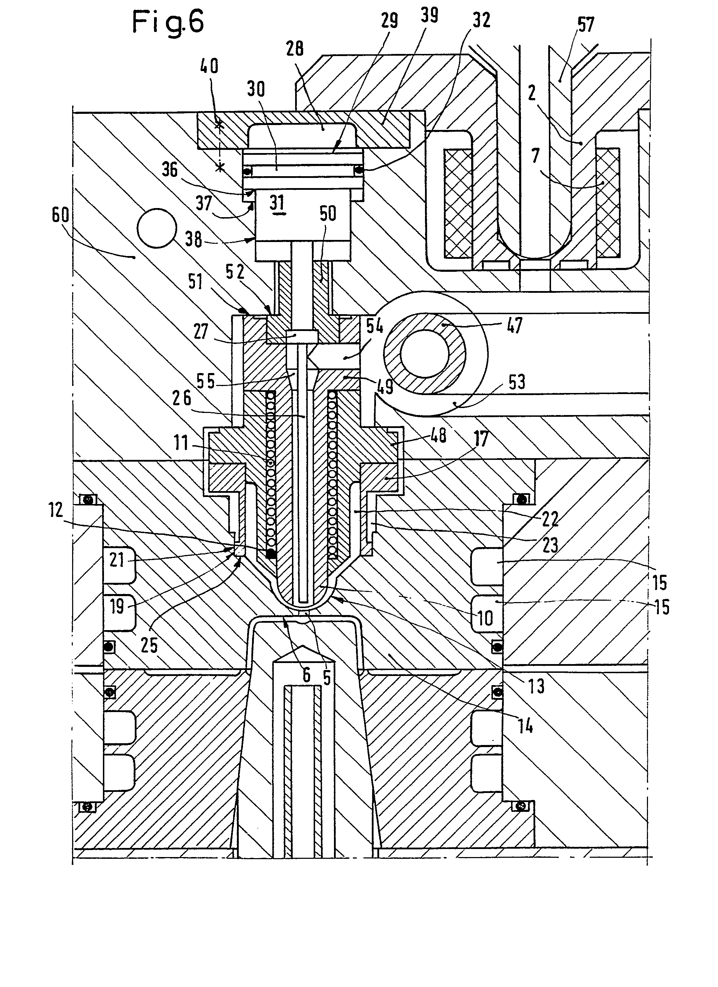

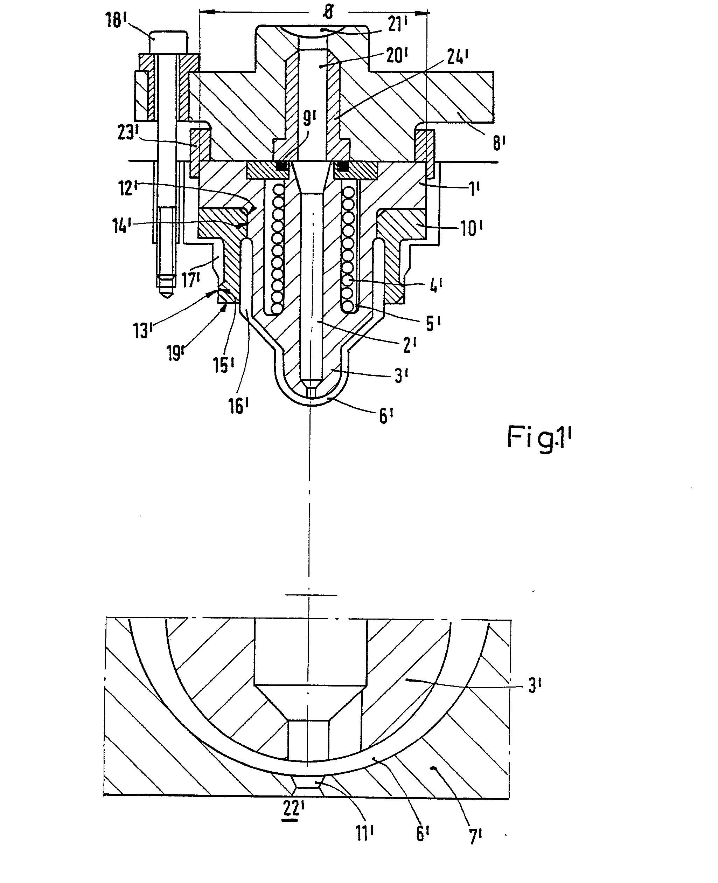

Further, care has to be taken that little heat is lost through conduction from the injection nozzle to the cavity plate. In order to realize this, the spacer and centering bushing has been designed as shown in the attached drawings, figures 1 through 6.

In order to further reduce heat conduction losses from the heated distributor block and the injection nozzle, the heated distributor block is not in contact with the front plate of the injection molding arrangement, but assembled directly by way of the spacer and centering bushing to the cavity plate with high quality socket head cap screws.

In this manner, a compact unit of the above-mentioned parts is obtained through which in the locations of the surfaces of contact of the spacer and centering bushing with the cavity plate the unit pressure against each other is so large (but still allowable) that no plastics can leak through to the outside and thus a proper closure is obtained.

Making the surface of contact of the injection nozzle which is in contact with the heated distributor block, large with respect to the length of the injection nozzle, facilitates a proper and regular heat exchange between them, through which it even becomes possible, during the processing of plastics with a wide melting temperature range, to perform injection molding without heating the injection nozzle separately, all required heat is then coming from the heated distributor block and will flow easily to the lower injection apertures, because of the large area of contact with the injection nozzle. This is thus only possible with a small ratio of length to diameter. To obtain a proper closure between these two parts, a special gasket has been placed around the distributor channel. Because the above-mentioned surfaces are in flat contact only, the heated distributor block can expand freely as a result of the heat to be supplied to it and thus slide freely over the surface of the injection nozzle.

According to the subject matter of the invention, a single injection nozzle is provided with a heating element and a thermocouple and has more than one lower nozzles, as many as there are injection apertures, with a free exit opening, and in which more than one externally adjustable fixed needles can be placed or omitted, or one or more externally adjustable needle valves. All above-mentioned manners of injection can be realized in placing the injection nozzle centrally in the injection molding arrangement or installing this injection nozzle in a hot runner design.

In order to facilitate full utilization of the above-mentioned parts of the invention through which a 100% break down free injection arrangement is aimed at, the parts which are required for the application of the invention and will be part and parcel of it, will be described below.

Because the injection nozzle contains several lower injection apertures which protrude with respect to it and if it is necessary to place the lower injection apertures as close to each other as possible, and to obtain the correct location of the lower apertures with respect to the injection openings in the cavity plates, a spacer and centering ring can be utilized here, which insures proper centering of the entire injection nozzle with respect to the cavity plate so that the lower injection apertures are placed exactly opposite the injection openings.

If it is necessary to injection mold a certain type of plastics such as polycarbonate, P.V.C., acetate, nylon, acrylates and other high quality plastics which have a narrow range of processing parameters such as melting temperature within which these can be properly processed especially in the vicinity of the lower aperture, care should be taken that at this location the temperature remains constantly at the correct value. This is attained mainly in producing the injection nozzle from a material with high heat conductivity, e.g. beryllium copper and in heating this by means of an integrally cast, plastics- tight heating element, provided with a thermocouple which should be placed as close as possible to the lower nozzle.

Further, care should be taken not to lose too much heat through conductivity of the injection nozzle with respect to the cavity plate. To realize this, the spacer and centering ring is designed as shown in the attached drawings Fig. 1' through 7'.

In order to further reduce heat conduction losses from the heated distributor block and the injection nozzle, the heated distributor block is not installed against a front plate of the injection molding arrangement, but bolted directly against the cavity plate via the adaptor plate or installation unit by means of the above-mentioned spacer and centering ring, with high strength socket head cap screws.

In this manner, a compact assembly of the above-mentioned parts is obtained, so that at the location of the surfaces of contact of the spacer and centering ring with the cavity plate the unit pressure with respect to each other is so large (but still allowable) that this way no plastics can leak to the outside and thus the proper closure is obtained.

Making the surface of contact of the injection nozzle with the heated distributor block large with respect to the length of this injection nozzle results in proper and uniform heat exchange which even makes it possible in processing those plastics which have a large melting range, to injection mold without separately heating the injection nozzle. All heat thus emanates from the heated distributor block and flows easily via the large area of contact of the injection nozzle to the lower injection apertures. Thus this is only possible with small length to diameter ratios. To obtain the proper closure between these two parts the distributor channel is surrounded by a special gasket. Because the above surfaces are in plane contact, the distributor block is free to expand as a result of the added heat and can slide freely over the surface of the injection nozzle.

The invention will now be illustrated with the aid of drawings for several application examples, in which:—

Fig. 1 — a cross-section through part of an arrangement for injection molding of plastics, provided with a single needle valve which is not subject of the present invention and in which the plunger has been placed in the heated distributor block.

Fig. 2 — a cross-section of Fig. 1, taken through the center line of the needle valve.

Fig. 3 — a cross-section as shown in Fig. 2, but this time of a manifold application.

Fig. 4 — a cross-section of a needle valve, activated by a plunger, applied centrally located in an injection molding arrangement and against which the injection nozzle of the injection machine is directly placed.

Fig. 5 — a cross-section as shown in Fig. 4, but now in manifold application.

Fig. 6 — a cross-section of a part of an arrangement for injection molding of plastics which is provided with a single needle valve and in which the plunger is placed within a part of a channel block which is not directly heated by a heating element, which can also be used in a manifold application in accordance with the invention.

Fig. 1′ — a cross-section of the injection molding mechanism with a free injection aperture, placed centrally in an injection arrangement.

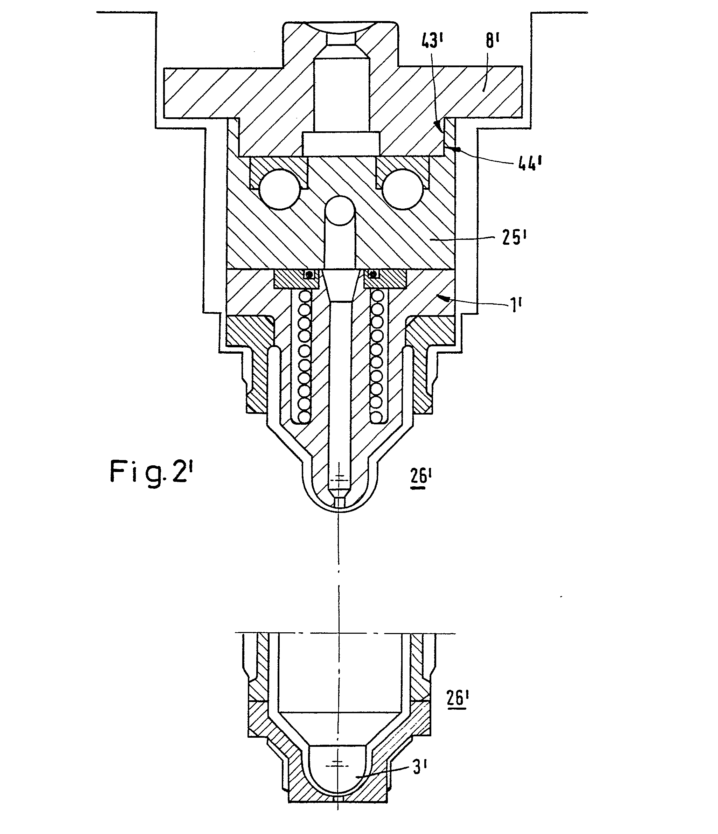

Fig. 2′ — a cross-section of the injection molding mechanism with a free injection aperture, placed in a hot runner injection molding arrangement.

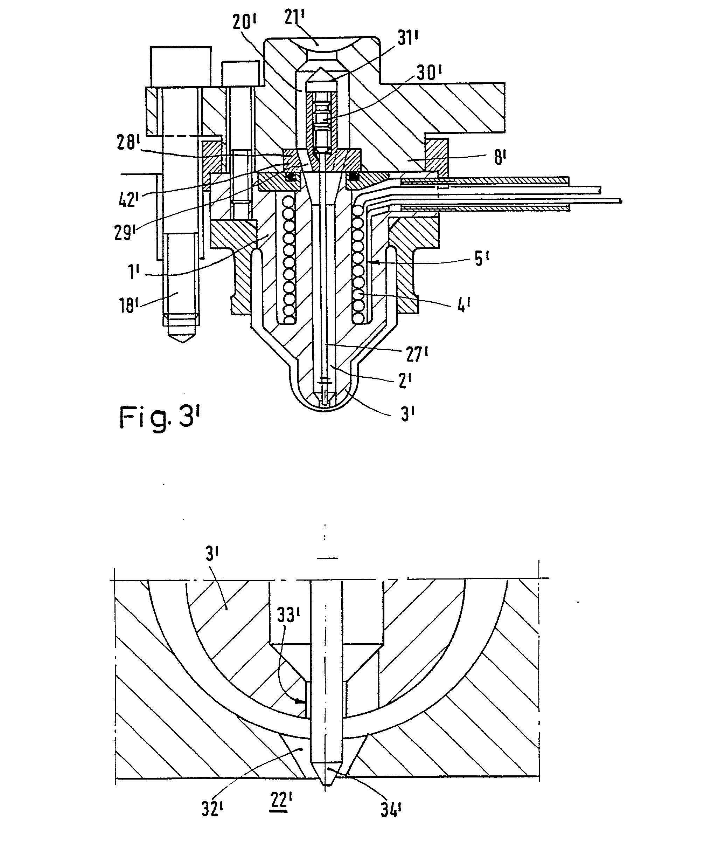

Fig. 3′ — a cross-section of the injection molding mechanism with a free injection aperture, in which opening has been placed a fixed needle which can be adjusted externally, which mechanism is placed centrally in an injection molding arrangement.

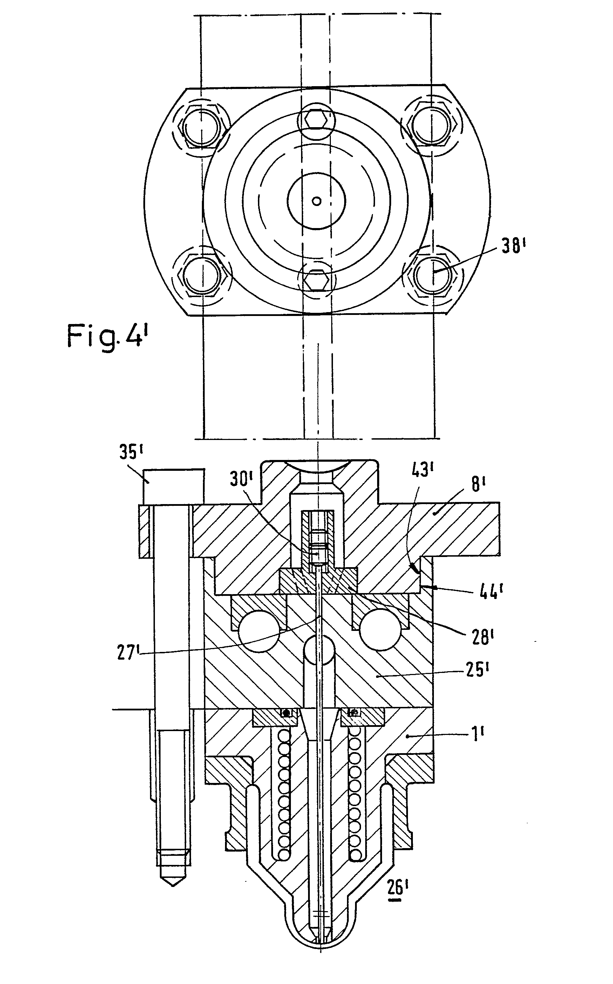

Fig. 4′ — a cross-section of the injection mechanism, with a free injection aperture, in which has been placed a fixed needle which is externally adjustable, which mechanism has been placed in a hot runner injection molding arrangement.

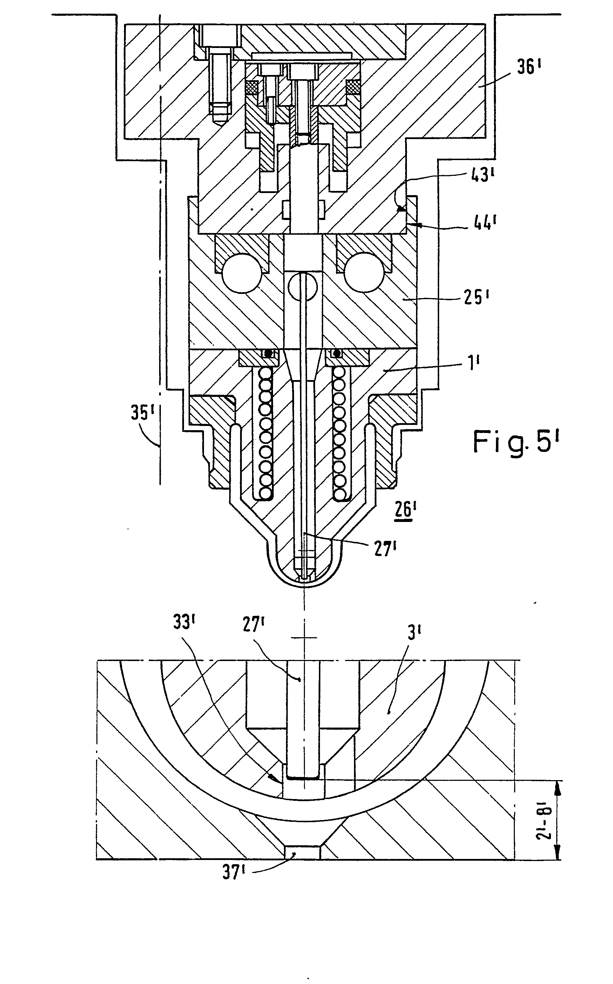

Fig. 5′ — a cross-section of the injection molding mechanism, with a free injection aperture, in which an externally adjustable needle valve has been placed, which is placed in a hot runner injection molding arrangement.

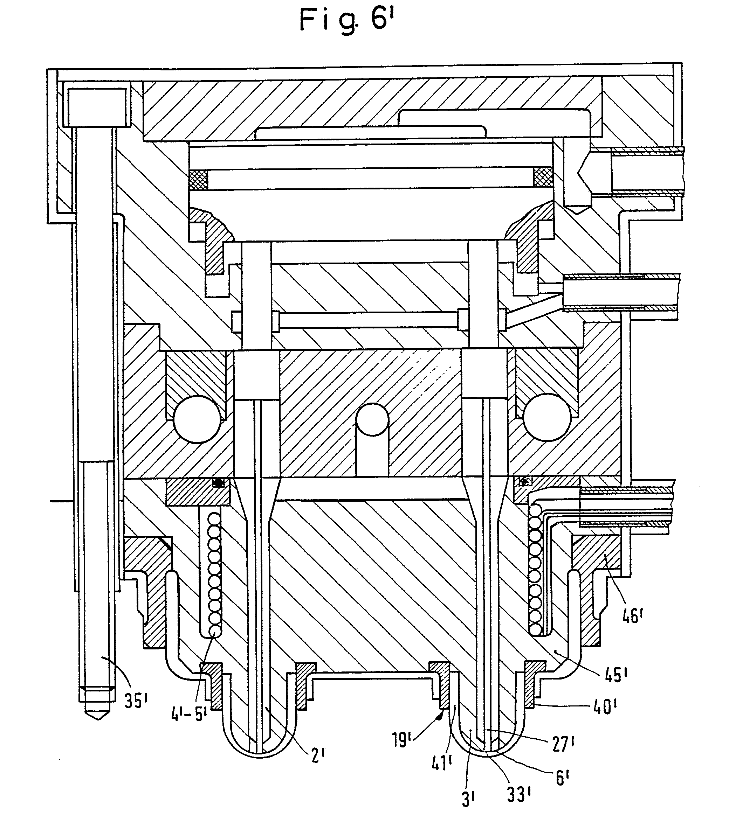

Fig. 6′ — a cross-section of the injection mechanism, with several free injection apertures in which an externally adjustable needle valve has been placed, which is placed in a hot runner injection molding arrangement.

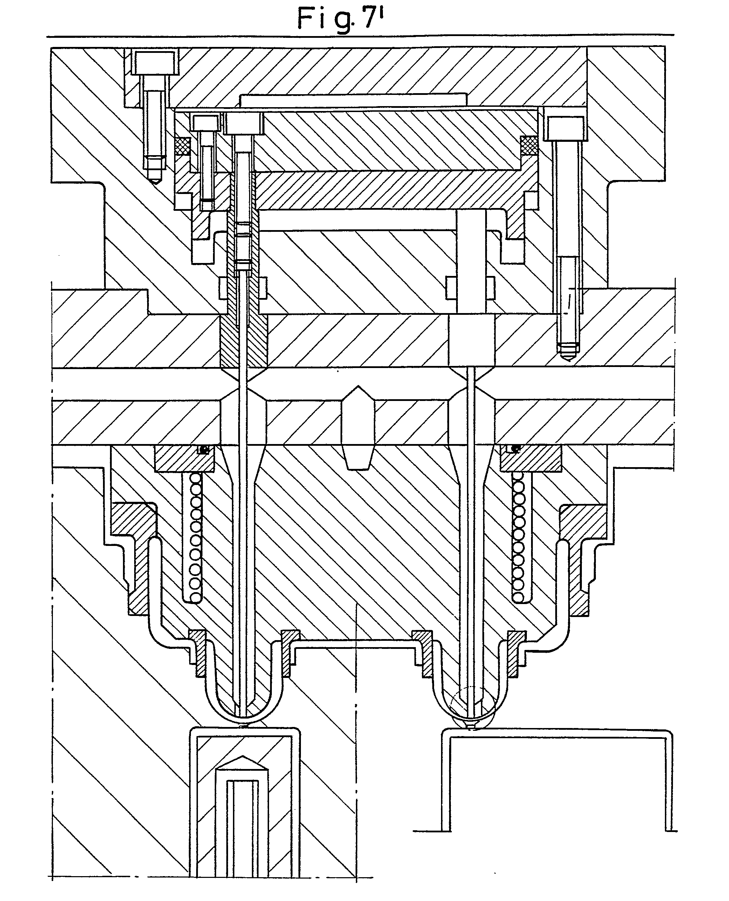

Fig. 7′ — a cross-section of Fig. 6′ running through the center line.

In the above mentioned figures, starting with Fig. 1, number 1, are indicated part of the entity of the heated distributor block of an injection molding arrangement, with injection bushing 2 through which the molten plastics enter the injection molding arrangement from the injection machine and by way of distributor channels 3 and 4 and injection aperture 10 is injected into the form cavity 6 through injection opening 5. The injection bushing 2 is provided with band heater element 7 and the heated distributor block 1 is provided with heater cartridges 8. Against the heated distributor block has been placed the injection nozzle 9 provided with distributor channel 4, which in turn is provided with the lower injection aperture 10. In the injection nozzle has been placed a cast-in heater element 11, provided with a thermocouple 12. This thermocouple should be located nearest the vicinity of the lower aperture, because this is the critical point as far as keeping the molten plastics in the space between the lower aperture 10 and the recess 13 in the form cavity plate 14, at the proper temperature. Near the lower aperture the plastics material is kept warm respectively warms up or cools off, depending on the temperature control of the injection nozzle.

Because the temperature of the injection nozzle can be controlled externally by means of an installed thermocouple, the temperature of the lower aperture can be managed accurately. This is of great importance in injection molding of so-called engineering materials having a narrow processing temperature range, in which the molten plastics are either too cold and resistant to flow or too hot and thus are burnt and become unfit for use. On the side of recess 13 in form cavity plate 14 the molten plastics are cooled off locally because the form cavity plate is cooled off by a cooling fluid in cooling channels 15. Because in the described system the temperatures of both above-mentioned sides 10 and 13 can be controlled and particularly at the location of side 10, injection molding with the described system will be performed without problems.

The closure between the injection nozzle and the heated distributor block is obtained by a special gasket 16. In order to incur as little as possible heat conduction losses, a spacer and centering bushing 17 is placed between injection nozzle 9 and the form cavity plate 14, realized as shown in the attached drawings Fig. 1 through 6. Mathematically it can be shown that this design provides 6 to 10 times less heat conductivity and therefore also 6 to 10 times less heat loss. In order to assemble the injection nozzle accurately opposite the injection opening 5, the spacer and centering bushing 17 is used. The injection nozzle is centered with respect to the rim 18 in the spacer and centering bushing, which in turn is centered in the form cavity plate 14 with respect to the diameter 19. The surfaces 20 and 21 of the spacer and centering bushings 17 will have to be coaxial within predetermined tolerances.

Installing the spacer and centering bushing provides airspace 22 between bushing 17 and injection nozzle 9, this spacer 22 will be filled with plastics and will provide the proper thermal insulation between both mentioned parts 9 and 14. The installation of the spacer and centering bushing 17 also provides an air gap 23 resulting in a second thermal insulation between injection nozzle 9 and form cavity plate 14. Installing injection nozzle 9 with high quality socket head cap screws 24 in the heated distributor block by way of the spacer and locating ring 17 on form cavity plate 14, such a large, but still allowable, pressure is obtained on surface 25, that this results in an absolute closure against leakage of the molten plastics from the distributor channels 3 and 4.

Installation of the socket head cap screws also pulls the heated distributor block 1 against injection nozzle 9 also here resulting in the proper closure as well as the proper heat flow from the heated distributor block in the direction of the injection nozzle. Because mentioned parts are connected with each other by means of the socket head cap screws 24, the heated distributor block 1 does not need to be supported by a clamping plate of the injection molding arrangement, so that here also there are no contacting surfaces resulting in heat losses and the installation height of the injection molding arrangement can be kept smaller.

Correct adjustment should result in location of the front surface of the needle 26 of which the front end is cylindrical or nearly cylindrical, in the same plane as the surface of the product cavity of the injection molding arrangement.

At the start of the injection process, space 28 above the plunger is vented to atmosphere, at the same time at the start of the injection cycle the pressure to which the molten plastics are subjected will press needle 26, which is assembled to guide bushing 27 via the surface of the enlarged part of bushing 27 against frictional resistance, moving it a distance of about 4 mm, so that the molten plastics can enter the product cavity 6 by way of the injection opening 5. The travel of needle 26 is limited through contact of the shoulder of the guide bushing 27 against a surface in the bore in the heated distributor block.

As soon as the injection cycle has been terminated, the pressure in the distributor channels 3 and 4 will increase no longer and if the injection nozzle 57 of the injection machine (see Fig. 6), after termination of the injection cycle, is pulled back in the injection bushing 2, the existing pressure in the distributor channels 3 and 4 will be reduced rapidly and if there exists a proper fit between the injection nozzle and the injection bushing a vacuum will even result in the distributor channels.

The instant the total injection cycle will be terminated, a signal from within the injection machine will cause compressed air to press on surface 29 of the plunger existing of parts 30 and 31. In the plunger the guide bushing 27 has been installed which is secured against turning and in the guide bushing in turn the needle 26 is installed. The compressed air causes a force to act through which the plunger and thereby the needle 26 are moved downward with great force and speed, so that the injection opening 5 is closed and the front end of the needle 26 is caused to lie in one plane with the outside surface of the form cavity 6. As was described above, at the beginning of the injection of plastics, the compressed air is vented and the space 28 above surface 29 will lose its pressure.

The tightness of the closure of the point of the needle valve in the injection opening is not critical, because during the closed condition of the needle valve, no large pressure differences are occurring, so that closure against a ringshaped surface of minor dimension (about 0.5 mm) suffices. In order to minimize wear during operation, the edge of the bottom front surface of the needle is provided with a radius of about 0.2 mm, in addition, the corresponding inside edge of the injection aperture in the recess 13 is chamfered.

The plunger consisting of parts 30 and 31 which are held together by socket head cap screws 33 are located with respect to each other through the accurate male-female fit 34 between the two, in addition the plunger contains a gasket ring 32. Guide bushing 27 is installed in the plunger with ample clearance but secured against rotation with cap screw 35, so that independent guiding of the plunger assembly as well as guide bushing 27 with respect to each other are assured.

Leakage around the plunger is prevented by the gasket 32 and after completion of its travel, surface 36 of the plunger will be in contact with surface 37 of the heated distributor block, so that air which could escape around the gasket 32, should it become worn, is stopped anyway. Should, after a time, seats 36 or 37 become damaged, the compressed air is still up against closure 38.

The parts 30, 31 and 27 can easily be manufactured to the required tolerances, since they have a round geometry, this also goes for the corresponding bores for these parts in the heated distributor block. For convenient assembly and disassembly of the plunger and the needle valve, the heated distributor block 1 is provided with a cover 39, which is attached by means of socket head cap screws 40. This has the advantage that in case of break down in the described system, assembly and disassembly can be executed easily during the injection molding process, without having to remove the injection molding arrangement from the injection machine.

The closure against leakage of the molten plastics around the guide bushing 27 in the heated distributor block is obtained by an accurate fit of the one part within the other and by a large ratio of length versus diameter. To prevent wear in the heated distributor block, guide bushing 27 is heat treated, so that the hardness of the latter is lower than that of the distributor block. Should some molten plastics leak through, it will be collected in groove 41 from where it will run out via channel 42 and tube 43. This drainage will be facilitated during admittance of compressed air to the plunger since during the plunger's downward travel air within the space 58 is compressed and expelled by way of channel 59 and tube 43 causing a partial vacuum in channel 42.

In Fig. 2 and 3 it can be seen that the lead wires from the heater element and the thermocouple are brought to the outside through installed tube 44 to prevent damage in assembly and should leakage of molten plastics take place. Compressed air is supplied and vented through tube 45.

In Fig. 3 the application of a manifold design of the injection nozzle with several needle valves is shown. To this design the operation and all applications and characteristics of the single design as mentioned above and to be mentioned below, are applicable, subject to the condition that the injection nozzle has to be secured against rotation outside the diameter of the spacer and centering bushing.

In Fig. 4 and 5 the design of the central location is shown to which the premises as mentioned in Fig. 3 are also applicable. The parts 46 are band heater elements.

With reference to Fig. 6, the operation of a design in which the plunger is placed within a not directly heated distributor block 60 is described. To this design the operation and all applications and characteristics of the design as mentioned above and to be mentioned below are applicable.

The molten plastics within this distributor block are kept at the proper temperature by heated tubes 47. The above-mentioned injection nozzle 9 is now composed of parts 48, 49 and 50. The heater element 11, controlled by the internally installed thermocouple 12, will keep this injection nozzle at the desired temperature. To reduce heat conduction losses, part 49 contacts the distributor block 60 only with the narrow edge 51 which also goes for part 50 with edge 52.

Because part 49 is heated and is made from a highly conductive material, e.g. beryllium copper, the molten plastics which flow from distributor channels 53 to part 49, will flow to injection aperture 5 from distributor channels 54 and 55, whence to the product cavity.

Above, in Fig. 1 through 6, special designs of the needle valves have been described and it will be evident that several variations of the details are possible. Those parts which in accordance with the drawings have been designed to be operated with Allen wrenches, may be suited for operation with other tools, such as a screw driver. Moreover, the plunger can be activated as described in claims 1 through 6. The needle valve 26 may be installed directly in the plunger, in which case guide bushing 27 is eliminated and the plunger must be made double acting. The injection nozzle can also be composed from parts such as 48, 49 and 50.

In the above-mentioned figures starting with Fig. 1', the reference number 8' indicates the installation or adapter plate of the injection mechanism with injection opening 21' through which the molten plastics enter the injection mechanism from the injection machine and are injected via the distributor channels 20' and 2' and the injection opening 11' into the cavity 22'.

Against installation plate 8' has been placed the injection nozzle 1', which has been provided with distributor channel 2' running into the injection aperture 3'. The injection nozzle has been cast around a heater element 4' which is provided with thermocouple 5'. This thermocouple should be located as closely as possible in the vicinity of the lower aperture, because this is the critical point as far as the correct temperatures of the molten plastics are concerned. The molten plastics fill the space between the lower aperture 3' and the recess 6' in the cavity plate 7'. Near the lower aperture the plastics are kept warm, are heated or cooled depending on the temperature control of the injection nozzle.

Because the temperature of the injection nozzle can be controlled externally by virtue of the installation of a thermocouple, the temperature of the lower aperture can be exactly regulated. This is of extreme importance in injection molding of the so-called technical plastics which have a narrow processing temperature range, in which the molten plastics are either too cold and thus flow very difficult or too hot and thus burn out and are destroyed. In the recess 6' in the cavity plate 7' the molten plastics are cooled off because the cavity plate is cooled by means of a coolant flowing in cooling channels. Because in the described system the temperature of both mentioned sides 3' and 7' can be regulated and especially side 3', it will be possible to injection mold with the described system without problems.

The closure between the injection nozzle and the installation or adapter plate 8' is obtained by the special gasket 9'. In order to restrict heat losses as much as possible, a spacer and centering ring 10' is placed between injection nozzle 1' and cavity plate 7', which is designed as shown in the attached drawings, Fig. 1' through 7'. It can be proven mathematically that this design reduces heat conduction 6—10 times and thus reduces heat losses 6—10 times. In order to place the injection nozzle exactly opposite the injection opening 11', the spacer and centering ring 10' is utilized. On one end the injection nozzle is centered on edge 12' in the spacer and centering ring, which in turn is centered in the cavity plate 7' on diameter 13'. Surfaces 14' and 15' of the spacer and centering ring 10' therefore will be coaxial with each other within predetermined tolerances.

Installation of the spacer and centering ring results in an air space 16' between ring 10' and the injection nozzle 1'. This space 16' will be filled with plastics resulting in the proper thermal insulation between above-mentioned parts 1' and 7'. Installation of the spacer and centering ring 10' also results in an air space 17', providing a second thermal insulation between injection nozzle 1' and cavity plate 7'.

In assembling the injection nozzle 1' by means of high strength socket head cap screws and the spacer and centering ring 10', to cavity plate 7', such a high unit pressure (but still allowable) is obtained on surface 19', that this results in absolute closure against leakage of molten plastics from distributor channels 2' and 20'.

Installation of the socket head cap screws pulls installation plate 8' against the injection nozzle as well, also resulting in proper closure as well as proper heat flow from the injection nozzle in the direction of the installation plate. To obtain proper centering of parts 1' and 8', a centering ring 23' is installed whereas an exchangeable bushing 24' has been installed in installation plate 8'.

In Fig. 2', the injection molding mechanism of Fig. 1' has been installed such that the injection nozzle 1' is placed against the heated distributor block 25' (hot runner beam) and the installation plate 8' is placed on the heated distributor block. The installation plate 8' is provided with a centering edge 43' which fits accurately within the centering bore 44' in the hot runner beam 25'. With the socket head cap screws placed in the installation plate (not shown here but shown in Fig. 4', ref. no. 35'), the heated distributor block 25' and the injection nozzle 1' are bolted to the cavity plate 26'. Thus it is possible to utilize the injection molding mechanism shown in Fig. 1', which is here placed centrally in an injection molding mechanism in a hot runner design in that the hot runner beam is placed between installation plate 8' and injection nozzle 1', without the necessity to make any changes at all in parts 1' and 8'.

In Fig. 3', the injection molding mechanism shown in Fig. 1' has been installed such that here the injection molding mechanism has been provided with an externally adjustable fixed needle 27'. In removing bushing 24' of Fig. 1' and in replacing this by needle bushing 28', an injection molding mechanism is obtained with a free injection aperture provided with an externally adjustable fixed needle.

The needle bushing has been provided with several bores 29', through which the molten plastics flow from the injection molding machine via injection aperture 21' and the distributor channels 2' and 20' to the cavity 22'.

In the needle bushing 28' a needle is installed which has been threaded on one end and provided with a hexagon socket. It is secured by means of the lock screw 30'. In order to close the threaded hole, cap 31' has been installed. The needle can now be moved in the injection opening 32' to such extent that on the product to be injection molded no objectionable spot will result.

In order to center the needle in the injection aperture 32', the lower part 3' of the injection nozzle 1' has been designed such that the needle is centered between several points 33'.

It is even possible to make the fit between the needle and the centering points so close that the needle is in contact with the centering points and this results in flow of heat from the lower part of the nozzle 3', which is heated by the heating element in the nozzle, to the lower tip 34' of the needle to such a temperature that the plastics in injection opening 32' can not freeze, and the aperture thus remains open. To obtain a proper heat flow via the needle to point 34', the needle is made of a high conductive material such as beryllium copper.

Fig. 4' is the injection molding mechanism of Fig. 3', installed such that here the injection nozzle 1' is placed against the hot runner beam 25' and the installation plate 8' containing the needle bushing 28', needle 27', and the lock screw 30', is placed on the hot runner beam. Installation plate 8' has a centering edge 43' which fits accurately in the centering bore 44' of hot runner beam 25'. This centering and the centering ring of the injection nozzle via the spacer and centering ring in the cavity plate, causes needle 27' to be aligned with the injection aperture, with the socket head cap screws 35' in the installation plate 8', the hot runner beam and the injection nozzle are bolted against cavity plate 26'. Here again the injection molding mechanism of Fig. 1' and 3' which are installed centrally in an injection molding arrangement, can be utilized in a hot runner design through placement of the hot runner beam between installation plate 8' and the injection nozzle 1', without any change to parts 1', 8' and 28'.

In Fig. 5' the injection mechanism has been installed such that here again the same injection nozzle 1' has been utilized on top of which the hot runner beam 25' has been placed, to which the needle valve as part of assembly 36' has been assembled. The entire assembly being bolted to the cavity plate 26' by means of the socket head cap screws 35'.

The needle valve contained in assembly 36' has been described in connection with Fig. 1—6 of the present application. The injection mechanism described here, with one or more needle valves, has been installed here in a separate assembly 36', such that this can be manufactured more readily in series production. The alignment of the assembly 36' on the hot runner beam has been designed in the same manner and the same dimensions as described in Figs. 2' and 4'.

Here also the needle valve 27' is aligned between several centering points 33' such as described in Fig. 3', this to obtain perfect location of the needle valve above the injection opening 37', which must close off, so that the injection opening will not wear on one side only.

In Figs. 1' through 5' identically the same injection nozzle 1' is utilized, as a complete unit as described in Fig. 1'. It is therefore possible to realize all existing types of injection molding with one and the same injection nozzle, if this is placed centrally in an injection molding arrangement as well as if this is placed in a hot runner injection molding arrangement.

The selection of a fixed pattern of installation bolts 38' (shown in Fig. 4') renders this injection mechanism universally applicable.

In Figs. 6' and 7' the design is shown of a manifold application of an injection molding arrangement with an injection nozzle 45' containing manifold lower apertures 3', in which are placed several needle valves 27'.

For the manifold design, the operation of all above-mentioned and hereafter to be mentioned applications and characteristics of the single design, shown and described in Figs. 1' through 5', are applicable to this manifold design, subject to the condition that the injection nozzle 45' besides the alignment via spacer and centering ring 46', has been provided with spacer and centering ring 40'.

For the description of the operation of this mentioned needle valve reference is made to the description of Figs. 1 through 6 of this application.

Above, in Figs. 1' through 7' preferential designs of an injection mechanism have been described according to the invention, but it is evident that within the framework of the invention, several variations of the design details are possible.

The parts which are conceived according to the drawings for servicing with the aid of Allen wrenches, can be conceived for servicing with other tools such as a screw driver.

## Claims

1. Injection mechanism for molding plastics, comprising more than one injection opening (5) and more than one injection aperture (10), characterized by an injection nozzle (9) which provides more than one injection aperture (10), these apertures (10) facing those openings (5).

2. Mechanism according to claim 1, characterized in that the apertures (10) within the injection nozzle (9) comprise needle valves (26), which are supplied with molten plastics by a common injection bushing (2), which needle valves (26) are opened by the pressure of the molten plastics during injection.

3. Mechanism according to claim 1 or 2, characterized by a common plunger, which actuates several needle valves (26) situated at different locations within the distributor block (1).

4. Mechanism according to one of claims 1 to 3, characterized in that a multi-fold injection nozzle (9) is provided, comprising

a) a heating means (11), a temperature control means (12) and at least one flow channel (4) for the plastic material and

b) a common distributor system (1, 2, 3, 8, 27, 30, 31, 32, 39, 24, 42, 59) consisting of a distributor block (1), an injection bushing (2) and distributor channels (3) connecting the injection bushing (2) with the flow channel (4) of each needle valve (26), a holding means (27) for the head of each needle valve (26), which is sealed against the distributor channels (3), a heating means (7) for the injection bushing (2), a further heating means (8) for the distributor block (1), and driving means for moving each needle valve (26) towards the lower injection opening (10, 5) and away from the injection opening.

5. Mechanism according to one of claims 1—4, characterized in that the driving means for moving the needle valve (26) comprises a guide bushing (27) the holding means (27), wherein the plastics material, injected via the distributor channels (3), presses each guide bushing (27) in direction of a space (28), and compressed air, directed to the space (28), presses down each needle valve (26) in direction of its corresponding lower injection opening (5), after the molding process has terminated.

6. Mechanism according to one of claims 4—5, characterized in that the needle head is sealed against the holding means (27) and fixed by adjusting screws (65), for adjusting the needle valve (26).

7. Mechanism according to one of claims 5—6, characterized in that the space (28) is formed by a cover (39) which is positioned on the distributor block (1).

8. Mechanism according to one of claims 1—7, characterized by a further space (58) around the top section of the holding means (27) which is connected to a channel (42) via a connection channel (59), for leading off leakage material between the holding means (27) in form of a bushing and the distributor block (1).

9. Mechanism according to claim 8, characterized in that the further space (58) is separated from the distributor block (1) by a cylinder (31) which is connected to the glidable holding means (27), wherein the air present in the further space (58) is compressed by the holding means (27) moving down and is pushed out via the channel (59) ejecting the leakage material from the end of the channel (42) which is in contact to the holding means (27), to the atmosphere.

10. Mechanism according to one or more of claims 1 to 9, characterized in that the plunger is actuated pneumatically, hydraulically or by one or more springs.

11. Mechanism according to one of claims 1 to 10, characterized in that the motion of the plunger is derived from a mechanism outside of the part in which the injection mechanism is installed.

12. Mechanism according to one of claims 1 to 11, characterized in that the needle valves (26) are provided in the plunger, that the plunger is acting in two directions, and that no guide bushing (27) is provided.

13. Mechanism according to one of claims 1 to 12, characterized in that the plunger has a shoulder (36) contacting a seat (37) within the distributor block (1), and that a close fit (38) between distributor block (1) and a plunger part (31) provides a third barrier.

14. Mechanism according to one of claims 1 to 13, characterized in that the plunger is composed of two plunger parts (30, 31) to form an integral unit which can be removed and installed in the bore through the rear surface of the (heated) distributor block (1) which bore is closed off by cover (39) which is fastened to the heated distributor block (1) by socket head cap screws (35).

15. Mechanism according to one of claims 1 to 14, characterized in that the needle valves (26) are attached to one or more guide bushings (27) which are axially movable in the heated distributor block (1).

16. Mechanism according to claim 15, characterized in that the guide bushing (27) has a collar at its front end functioning as a stop to the stroke of the needle valves, respectively the plunger to which the guide bushing (27) is attached by means of a socket head cap screw, wherein the presence of this collar provides an enlarged surface against which the injection pressure of the molten plastics can act resulting in a large force for opening the needle valves and wherein the presence of this collar also allows the other part of the guide bushing to be of small diameter ensuing in a large ratio of length vs. diameter which has to prevent leakage of molten plastics by virtue of the close fit between the two parts (1) and (27).

17. Mechanism according to claim 15, characterized in that the guide bushing has been attached to the plunger leaving clearance so that by this way an independent true fit of both the guide bushing and the plunger are assured, this guide bushing is provided with one or more flat spots corresponding with one more flat spots in the plunger.

18. Mechanism according to one or more of claims 1 to 17, characterized in that the guide bushing (27) is provided with one or more recesses (41) in which plastics leakage, should it occur, can be collected and expelled through a channel (42) which is connected to a further channel (59) extending from the bottom of the bore, in which the plunger is provided.

19. Mechanism according to one of claims 1 to 18, characterized in that the injection nozzle (9) provides a heating element including a thermo couple (12), that the portion providing the distributor channel(s) is made of highly conductive material as beryllium copper.

20. Mechanism according to one of claims 1 to 19, characterized in that the injection nozzle (1') can be provided with fixed needles (27') which can be externally adjusted, in which the points (34') of these needles enter the injection aperture (3') and thereby prevent that the plastics material reaches the injection opening (37') (Fig. 3).

21. Mechanism according to one of claims 1 to 19, characterized in that the injection nozzle (1') can be provided with needle valves (27') which can be adjusted externally, in which the points (34') of the needle valves (27') close the injection opening (32'; 37') after injection so that at the location of injection a smooth surface is obtained.

22. Mechanism according to one of claims 1 to 21, characterized in that the injection nozzle (1') is provided with a locating and centering sleeve (10'; 40') to obtain proper alignment and heat insulation with respect to the cavity plate (26') (Fig. 1'—7').

23. Mechanism according to one or more of claims 1 to 22, characterized by an adapter plate (8') on the injection nozzle (1') connecting it to the cavity plate (26').

24. Mechanism according to claim 23, characterized by a separate bushing (24') and a needle bushing (28') within the adapter plate (8') (Fig. 3' and 4'), both bushings fitting closely in bores of the adapter plate (8').

25. Mechanism according to claims 23 or 24, characterized in a centering shoulder of the adapter plate (8') which fits to the centering bore of a hot runner beam (25') or a centering ring provides a fitting centering shoulder.

26. Mechanism according to one of claims 1—25, characterized in that the needle bushing (28') contains a needle (27') provided with screw thread (39') and an internal hexagon, which screw thread fits within the internal screw thread (30') in the needle bushing (28'), such that the needle (27') is adjustable and can be locked in any position by means of one or more set screws (30').

27. Mechanism according to one of claims 1 to 26, characterized in that the bore within the needle bushing (28') containing the screw thread is closed off by a cap (31') (Fig. 3) such that no plastics can enter the bore, and also improving the flow pattern of the entering molten plastics.

28. Mechanism according to one of claims 1 to 27, characterized in that the needle bushing (28') is provided with a collar (42'), which is clamped with a light press fit between the injection nozzle (1') and adapter plate (8') in order to obtain the proper heat conductivity, also for this purpose the needle bushing has been made from a highly conductive material, i.e. beryllium copper, which can be provided with a protective surface in case corrosive plastics are processed and the collar also causes the needle bushing (28') to be centered correctly in the adapter plate (8') so that the needle is centered accurately in the middle of the distributor channel (2') and injection aperture (32').

29. Mechanism according to one of claims 1 to 28, characterized in that the hot runner beam (25') provides a centering bore (44') for proper centering the adapter plate (8') and the assembly (36') in which the needle valve (27') is provided.

30. Mechanism according to claim 29, characterized in that the assembly (36') comprises a pneumatically operated needle valve (27') (Figs. 1 to 6), and that adapter plate (8') and assembly (36') provide centering shoulders of the same dimensions and bolts (38').

31. Mechanism according to one of claims 1 to 30, characterized by preferably externally adjustable fixed needles (27') or by adjustable needle valves (27') and by the same number of injection openings (11'; 34'; 37').

32. Mechanism according to one of claims 1 to 31, characterized by separate centering rings (40') of the injection apertures (3') for aligning the injection nozzle (45') and for filling the molten plastics into the air space (41') and for sealing the injection apertures (3') and the cavity plate (26').

## Patentansprüche

1. Kunststoff-Spritzgießwerkzeug mit mehr als einer Spritzöffnung (5) und mehr als einer Spritzdüsenöffnung (10), gekennzeichnet durch eine Spritzdüse (9), die mehr als eine Spritzdüsenöffnung (10) umfaßt, wobei diese Öffnungen (10) den Spritzöffnungen (5) zugewandt sind.

2. Werkzeug nach Anspruch 1, dadurch gekennzeichnet, daß die Öffnungen (10) innerhalb der Spritzdüse (9) Nadelventile (26) aufweisen, denen durch eine gemeinsame Düsenbuchse (2) Kunststoffschmelze zugeführt wird und die während des Einspritzens durch den Druck der Kunststoffschmelze geöffnet werden.

3. Werkzeug nach Anspruch 1 oder 2, gekennzeichnet durch einen gemeinsamen Kolben, der mehrere, an verschiedenen Stellen innerhalb des Verteilerblocks (1) angeordnete Nadelventile (26) betätigt.

4. Werkzeug nach einem der Ansprüche 1 bis 3, dadurch gekennzeichnet, daß eine Mehrfach-Spritzdüse (9) vorgesehen ist, die aufweist:

a) eine Heizvorrichtung (11), eine Temperatursteuereinheit (12) und mindestens einen Kunststoff-Strömungskanal (4) sowie

b) ein gemeinsames Verteilersystem (1, 2, 3, 8, 27, 30, 31, 32, 39, 24, 42, 59) bestehend aus einem Verteilerblock (1), einer Düsenbuchse (2) und die Düsenbuchse (2) mit dem Strömungskanal (4) jedes Nadelventils (26) verbindenden Verteilerkanälen (3), einer gegenüber den Verteilerkanälen (3) dichten Halterung (27) für den Kopf jedes Nadelventils (26), einer Heizvorrichtung (7) für die Düsenbuchse (2), einer weiteren Heizvorrichtung (8) für den Verteilerblock (1) und einer Antriebsvorrichtung, die jedes Nadelventil (26) zur unteren Spritzöffnung (10, 5) und von dieser weg verschiebt.

5. Werkzeug nach einem der Ansprüche 1 bis 4, dadurch gekennzeichnet, daß die Antriebsvorrichtung zum Verschieben des Nadelventils (26) eine Führungsbuchse (27) als Halterung aufweist, wobei der über die Verteilerkanäle (3) eingespritzte Kunststoff jede Führungsbuchse (27) in Richtung eines Raums (28) drückt und in den Raum (28) gerichtete Druckluft jedes Nadelventil (26) in Richtung seiner entsprechenden Spritzöffnung (5) drückt, nachdem der Spritzgießvorgang beendet ist.

6. Werkzeug nach einem der Ansprüche 4 bis 5, dadurch gekennzeichnet, daß der Nadelkopf gegen die Halterung (27) dicht und mit Stellschrauben (65) zum Einstellen des Nadelventils (26) festgelegt ist.

7. Werkzeug nach einem der Ansprüche 5 bis 6, dadurch gekennzeichnet, daß der Raum (28) durch eine am Verteilerblock (1) angeordnete Abdeckung (39) gebildet ist.

8. Werkzeug nach einem der Ansprüche 1 bis 7, gekennzeichnet durch einen weiteren Raum (58) um den oberen Abschnitt der Halterung (27), der über einen Verbindungskanal (59) mit einem Kanal (42) zum Ableiten von Leckmaterial zwischen der als Buchse ausgebildeten Halterung (27) und dem Verteilerblock (1) verbunden ist.

9. Werkzeug nach Anspruch 8, dadurch gekennzeichnet, daß der weitere Raum vom Verteilerblock (1) durch einen mit der verschiebbaren Halterung (27) verbundenen Zylinder (31) getrennt ist, wobei die in dem weiteren Raum (58) vorhandene Luft durch die sich abwärts bewegende Halterung (27) komprimiert und über den Kanal (59) ausgestoßen wird, wobei das Leckmaterial aus dem Ende des Kanals (42), das die Halterung (27) kontaktiert, zur Atmosphäre ausgestoßen wird.

10. Werkzeug nach einem oder mehreren der Ansprüche 1 bis 9, dadurch gekennzeichnet, daß der Kolben pneumatisch, hydraulisch oder durch eine oder mehrere Federn betätigt wird.

11. Werkzeug nach einem der Ansprüche 1 bis 10, dadurch gekennzeichnet, daß die Kolbenbewegung von einer Vorrichtung außerhalb des Teils, in dem das Werkzeug montiert ist, erzeugt wird.

12. Werkzeug nach einem der Ansprüche 1 bis 11, dadurch gekennzeichnet, daß die Nadelventile (26) im Kolben angeordnet sind, daß der Kolben ein Zweirichtungskolben ist, und daß keine Führungsbuchse (27) vorgesehen ist.

13. Werkzeug nach einem der Ansprüche 1 bis 12, dadurch gekennzeichnet, daß der Kolben eine einen Sitz (37) im Verteilerblock (1) kontaktierende Schulter (36) aufweist, und daß durch eine satte Anlage (38) zwischen dem Verteilerblock (1) und einem Kolbenteil (31) eine dritte Barriere gebildet ist.

14. Werkzeug nach einem der Ansprüche 1 bis 13, dadurch gekennzeichnet, daß der Kolben unter Bildung einer geschlossenen Einheit aus zwei Teilen (30, 31) besteht, wobei diese durch die Rückseite des (erwärmten) Verteilerblocks (1) aus der Bohrung aus- bzw. in diese einbaubar ist und wobei die Bohrung durch die mit Zylinderschrauben mit Innensechskant (35) am erwärmten Verteilerblock (1) befestigte Abdeckung (39) verschlossen ist.

15. Werkzeug nach einem der Ansprüche 1 bis 14, dadurch gekennzeichnet, daß die Nadelventile (26) an einer oder mehreren im erwärmten Verteilerblock (1) axial verschiebbaren Führungsbuchsen (27) befestigt sind.

16. Werkzeug nach Anspruch 15, dadurch gekennzeichnet, daß die Führungsbuchse (27) an ihrem Vorderende eine Schulter aufweist, die als Anschlag für den Hub der Nadelventile bzw. des Kolbens wirkt, an dem die Führungsbuchse (27) mit einer Zylinderschraube mit Innensechskant befestigt ist, wobei diese Schulter eine größere Fläche bildet, gegen die der Spritzdruck der Kunststoffschmelze wirken kann unter Erzeugung einer großen Kraft zum Öffnen der Nadelventile und wobei ferner durch diese Schulter der andere Teil der Führungsbuchse von kleinem Durchmesser sein kann, so daß das Verhältnis Länge: Durchmesser groß ist, das aufgrund der satten Anlage zwischen den beiden Teilen (1) und (27) eine Austritt von Kunststoffschmelze verhindern soll.

17. Werkzeug nach Anspruch 15, dadurch gekennzeichnet, daß die Führungsbuchse mit Spiel am Kolben befestigt ist, so daß dadurch eine unabhängige echte Passung sowohl der Führungsbuchse als auch des Kolbens sichergestellt ist, wobei diese Führungsbuchse eine oder mehrere Abflachungen aufweist, die einer oder mehreren Abflachungen im Kolben entsprechen.

18. Werkzeug nach einem oder mehreren der Ansprüche 1 bis 17, dadurch gekennzeichnet, daß die Führungsbuchse (27) eine oder mehrere Ausnehmungen (41) aufweist, in denen gegebenenfalls austretender Kunststoff gesammelt und durch einen Kanal (42) ausgestoßen werden kann, der mit einem weiteren, sich vom Unterende der Bohrung, in der der Kolben angeordnet ist, erstreckenden Kanal (59) verbunden ist.

19. Werkzeug nach einem der Ansprüche 1 bis 18, dadurch gekennzeichnet, daß die Spritzdüse (9) ein Heizelement mit einem Thermoelement (12) bildet, und daß der den Verteilerkanal bzw. die Verteilerkanäle bildende Teil aus einem hochleitfähigen Werkstoff wie Berylliumkupfer besteht.

20. Werkzeug nach einem der Ansprüche 1 bis 19, dadurch gekennzeichnet, daß die Spritzdüse (1') feststehende, von außen einstellbare Nadeln (27') aufweisen kann, wobei die Spitzen (34') dieser Nadeln in die Spritzdüsenöffnung (3') eintreten und damit verhindern, daß der Kunststoff die Spritzöffnung (37') erreicht (Fig. 3).

21. Werkzeug nach einem der Ansprüche 1 bis 19, dadurch gekennzeichnet, daß die Spritzdüse (1') von außen einstellbare Nadelventile (27') aufweisen kann, wobei die Spitzen (34') der Nadelventile (27') die Spritzöffnung (32'; 37') nach Einspritzung schließen, so daß an der Einspritzstelle eine glatte Oberfläche entsteht.

22. Werkzeug nach einem der Ansprüche 1 bis 21, dadurch gekennzeichnet, daß die Spritzdüse (1') eine Positionier- und Zentrierhülse (10'; 40') aufweist zum Erzielen einer genauen Ausrichtung und Wärmeisolierung relativ zur Gesenkplatte (26') (Fig. 1', 7').

23. Werkzeug nach einem oder mehreren der Ansprüche 1 bis 22, gekennzeichnet durch eine Adapterplatte (8') an der Spritzdüse (1'), die diese mit der Gesenkplatte (26') verbindet.

24. Werkzeug nach Anspruch 23, gekennzeichnet durch eine gesonderte Buchse (24') und eine Nadelbuchse (28') in der Adapterplatte (8') (Fig. 3' und 4'), wobei beide Buchsen satt in Bohrungen der Adapterplatte (8') anliegen.

25. Werkzeug nach Anspruch 23 oder 24, gekennzeichnet durch eine Zentrierschulter der Adapterplatte (8'), die in die Zentrieröffnung eines Heißkanalblocks (25') eingesetzt ist, oder durch einen eine passende Zentrierschulter bildenden Zentrierring.

26. Werkzeug nach einem der Ansprüche 1 bis 25, dadurch gekennzeichnet, daß die Nadelbuchse (28') eine Nadel (27') mit einem Gewinde (39') und einem Innenhexagon aufweist, wobei das Gewinde in das Innengewinde (30') der Nadelbuchse (28') paßt, so daß die Nadel (27') einstellbar und mit einer oder mehreren Justierschrauben (30') in jeder Stellung verriegelbar ist.

27. Werkzeug nach einem der Ansprüche 1 bis 26, dadurch gekennzeichnet, daß die das Gewinde aufweisende Bohrung in der Nadelbuchse (28') mit einer Kappe (31') verschlossen ist (Fig. 3'), so daß kein Kunststoff in die Bohrung eintritt und ferner der Fließverlauf der eintretenden Kunststoffschmelze verbessert wird.

28. Werkzeug nach einem der Ansprüche 1 bis 27, dadurch gekennzeichnet, daß die Nadelbuchse (28') eine Schulter (42') aufweist, die im leichten Preßsitz zwischen der Spritzdüse (1') und der Adapterplatte (8') verspannt ist zur Erzielung der angemessenen Wärmeleitfähigkeit, wobei ebenfalls zu diesem Zweck die Nadelbuchse aus hochleitfähigem Werkstoff, d.h. Berylliumkupfer, besteht, das bei Verarbeitung eines korrodierenden Kunststoffs mit einer Schutzoberfläche versehen werden kann, und wobei durch die Schulter ferner die Nadelbuchse (28') richtig in der Adapterplatte (8') zentriert wird, so daß die Nadel genau in der Mitte des Verteilerkanals (2') und der Spritzöffnung (32') zentriert ist.

29. Werkzeug nach einem der Ansprüche 1 bis 28, dadurch gekennzeichnet, daß der Heißkanalblock (25') eine Zentrierbohrung (44') zum richtigen Zentrieren der Adapterplatte (8') und der das Nadelventil (27') aufweisenden Anordnung (36') bildet.

30. Werkzeug nach Anspruch 29, dadurch gekennzeichnet, daß die Anordnung (36') ein pneumatisch betätigtes Nadelventil (27') (Fig. 1 bis 6) aufweist, und daß die Adapterplatte (8') und die Anordnung (36') gleich dimensionierte Schultern und Bolzen (38') aufweisen.

31. Werkzeug nach einem der Ansprüche 1 bis 30, gekennzeichnet durch vorzugsweise von außen einstellbare feststehende Nadeln (27') oder durch einstellbare Nadelventile (27') und durch die gleiche Anzahl von Spritzöffnungen (11'; 34'; 37').

32. Werkzeug nach einem der Ansprüche 1 bis 31, gekennzeichnet durch gesonderte Zentrierringe (40') der Spritzöffnungen (3') zum Ausrichten der Spritzdüse (45') und zum Füllen von Kunststoffschmelze in den Luftraum (41') sowie zum dichten Verschließen der Spritzöffnungen (3') und der Gesenkplatte (26').

## Revendications

1. Mécanisme d'injection pour le moulage de matières plastiques comprenant plus d'un orifice d'injection (5) et plus d'une ouverture d'injection (10) caractérisé par une buse d'injection (9) dotée de plus d'une ouverture d'injection, ces ouvertures (10) faisant face à ces orifices (5).

2. Mécanisme selon la revendication 1, caractérisé en ce que les ouvertures (10) à l'intérieur de la buse d'injection (9) sont munies de soupapes .à pointeau (26) approvisionnées en matière plastique fondue par l'intermédiaire d'une douille d'injection ordinaire (2) ces soupapes à pointeau (26) étant ouvertes pendant l'injection par l'effet de la pression de la matière plastique fondue.

3. Mécanisme selon la revendication 1 ou 2, caractérisé par un piston ordinaire actionnant plusieurs soupapes à pointeau (26) situées en différents emplacements à l'intérieur du bloc distributeur (1).

4. Mécanisme selon l'une des revendications 1 à 3, caractérisé en ce qu'il est muni d'une buse d'injection multiple (9), comprenant:

a) un dispositif de chauffage (11), un dispositif de contrôle de la température (12) et au moins un canal d'écoulement (4) de la matière plastique, et

b) un système de distribution ordinaire (1, 2, 3, 8, 24, 27, 30, 31, 39, 42, 59) se composant d'un bloc distributeur (1), d'une douille d'injection (2) et de canaux de distribution (3) reliant la douille d'injection (2) au canal d'écoulement (4) correspondant à chaque soupape a pointeau (26), d'un dispositif de fixation (27) pour la tête de chaque soupape à pointeau (26), étanchéifié au regard des canaux de distribution (3), d'un dispositif supplémentaire de chauffage (8) pour le bloc distributeur (1) et de moyens de commande permettant de déplacer chaque soupape à pointeau (26) en direction de l'orifice d'injection inférieur (10, 5) et en direction contraire.

5. Mécanisme selon l'une des revendications 1 à 4, caractérisé en ce que le dispositif de commande permettant de déplacer la soupape à pointeau (26) comprend une douille de guidage faisant fonction de dispositif de fixation (27), de manière à ce que, après l'achèvement du processus de moulage, la matière plastique, injectée par voie des canaux de distribution (3), presse chaque douille de guidage (27) en direction d'un espace (28), et que l'air comprimé, dirigé vers l'espace (28) pousse chaque soupape à pointeau (26) vers le bas en direction de l'orifice d'injection inférieur (5).

6. Mécanisme selon l'une des revendications 4 et 5, caractérisé en ce que le pointeau est étanchéifiée au regard de la fixation (27) et fixé à l'aide de vis d'ajustage (65) permettant d'ajuster la soupape à pointeau (26).

7. Mécanisme selon l'une des revendications 5 et 6, caractérisé en ce que l'espace (28) est délimité par un couvercle (39) placé sur le bloc distributeur (1).

8. Mécanisme selon l'une des revendications 1 à 7, caractérisé par un espace supplémentaire (58) autour de la section supérieure du dispositif de fixation (27), communiquant avec un canal (42) par l'intermédiaire d'un canal de liaison (59), et permettant de dégager les matériaux de fuite en les faisant passer entre la fixation en forme de douille et le bloc distributeur (1).

9. Mécanisme selon la revendication 8, caractérisé en ce que cet espace supplémentaire (58) est séparé du bloc distributeur (1) par un cylindre (31) raccordé au dispositif de fixation coulissant (27), de telle sorte que l'air se trouvant dans cet espace supplémentaire (58) est compressé par le mouvement vers le bas du dispositif de fixation (27) et pressé dans le canal (59), éjectant les matériaux de fuite dans l'atmosphère par le bout du canal (42) se trouvant en contact avec le dispositif de fixation (27).

10. Mécanisme selon l'une ou plusieurs des revendications 1 à 9, caractérisé en ce que le piston est actionné pneumatiquement, hydrauliquement ou par un ou plusieurs ressorts.

11. Mécanisme selon l'une des revendications 1 à 10, caractérisé en ce que le mouvement du piston est dérivé d'un mécanisme se trouvant à l'extérieur de la partie dans laquelle est installée le mécanisme d'injection.

12. Mécanisme selon l'une des revendications 1 à 11 caractérisé en ce que les soupapes à pointeau (26) sont fixées sur le piston, que le piston se déplace dans deux directions et qu'il n'y a pas de douille de guidage (27).

13. Mécanisme selon l'une des revendications 1 à 12, caractérisé en ce que le piston est doté d'une épaule (36) se trouvant en contact avec une embase (37) du bloc distributeur (1) et en ce qu'un ajustment fin (38) entre le bloc distributeur (1) et l'une des parties du piston (31) forme une troisième barrière.

14. Mécanisme selon l'une des revendications 1 à 13, caractérisé en ce que le piston se compose de deux parties (30, 31) formant une pièce unique pouvant être retirée et replacée dans la chambre du piston en la passant par la face postérieure du bloc distributeur (1) cette chambre étant fermée par un couvercle (39) attaché au bloc distributeur chauffé (1) au moyen de vis à chapeau à six pans creux (35).

15. Mécanisme selon l'une des revendications 1 à 14, caractérisé en ce que les soupapes à pointeau (26) sont attachées à une ou plusieurs douilles de guidage (27) pouvant être déplacées axialement dans le bloc distributeur chauffé (1).

16. Mécanisme selon l'une des revendications 1 à 14, caractérisé en ce que la douille de guidage (27) est munie, à son extrémité antérieure, d'un collier faisant fonction de butée pour le mouvement des soupapes à pointeau par rapport au piston auquel est fixée la douille de guidage (27) à l'aide d'une vis à chapeau à six pans, de telle sorte que ce collier forme une surface élargie contre laquelle la pression d'injection de la matière plastique fondue peut agir, produisant une force importante pour ouvrir les soupapes à pointeau, et de telle sorte que la présence de ce collier permet à l'autre partie de la douille de guidage d'avoir un diamètre réduit, ce qui donne un rapport élevé entre la longueur et le diamètre de celle-ci et permet d'éviter les fuites de matière plastique fondue par l'effet de l'ajustement fin entre les deux parties (1) et (27).

17. Mécanisme selon l'une des revendications 1 à 15, caractérisé en ce que la douille de guidage est attachée au piston en laissant un espace libre de manière à ce que, pour assurer un ajustement indépendant entre la la douille de guidage et le piston, cette douille de guidage est dotée d'un ou plusieurs aplatissements correspondant à un ou plusieurs aplatissements dans le piston.

18. Mécanisme selon l'une des revendications 1 à 17, caractérisé en ce que la douille de guidage (27) est munie de une ou plusieurs embrasures (41) dans lesquelles les fuites de matière plastique, si elles devaient survenir, peuvent être rassemblées et expulsées par un canal (42) communiquant avec un autre canal (59) partant du fond de la chambre du piston.

19. Mécanisme selon l'une des revendications 1 à 18, caractérisé en ce que la buse d'injection (9) est munie d'un élément de chauffage équipé d'un thermocouple (12) et en ce que la section formant le(s) canal(aux) distributeur(s) est réalisée dans un matériau hautement conducteur tel que le cuivre au bérylium.

20. Mécanisme selon l'une des revendications 1 à 19, caractérisé en ce que la buse d'injection (1') peut être munie de pointeaux fixes (27') pouvant être ajustés de l'extérieur, et en ce que les pointes de ces pointeaux (34') pénètrent dans l'ouverture d'injection (3') de manière à empêcher la matière plastique d'atteindre l'orifice d'injection (37').

21. Mécanisme selon l'une des revendications 1 à 19, caractérisé en ce que la buse d'injection (1') peut être munie de pointeaux fixes (27') pouvant être ajustés de l'extérieur, et en ce que les pointes de ces pointeaux (34') ferment l'orifice d'injection (32', 37') après l'injection de manière à obtenir une surface lisse à l'endroit de l'injection.

22. Mécanisme selon l'une des revendications 1 à 21, caractérisé en ce que la buse d'injection (1') est munie d'un manchon de centrage (10', 40') en vue d'obtenir un alignement correct et une bonne isolation thermique au regard de la plaque de recouvrement de la cavité (26').

23. Mécanisme selon l'une des revendications 1 à 22, caractérisé par une plaque adaptatrice (8') sur la buse d'injection (1') raccordant celle-ci à la plaque de recouvrement de la cavité (26').

24. Mécanisme selon l'une des revendications 1 à 23, caractérisé par une douille séparée (24') et une douille de pointeau (28') se trouvant dans la plaque adaptatrice (8') (figs. 3' et 4'), ces deux douilles étant ajustées finement dans des alésages de la plaque adaptatrice (8').

25. Mécanisme selon les revendications 23 ou 24, caractérisé par une épaule de centrage de la plaque adaptatrice (8') s'justant sur l'alésage de centrage d'une poutre de canal d'alimentation à chaud (25') ou par un anneau de centrage formant une épaule de centrage.

26. Mécanisme selon l'une des revendications 1 à 25, caractérisé en ce que la douille du pointeau (28') contient un pointeau (27') dotée d'un filetage de vis (39') et d'un hexagone intérieur, le filetage de vis étant adapté au filetage intérieur (30') pratiqué dans la douille de pointeau (28'), de manière à ce que le pointeau puisse être ajusté et verrouillé en toute position désirée au moyen d'une ou de plusieurs vis de pression (30').

27. Mécanisme selon l'une des revendications 1 à 26, caractérisé en ce que l'alésage intérieur de la douille de pointeau (28') muni du filetage de vis est fermé par un chapeau (31') (fig. 3) tel qu'aucune matière plastique ne puisse pénétrer à l'intérieur de l'alésage et que, en outre, l'écoulement de la matière plastique fondue entrante est amélioré.

28. Mécanisme selon l'une des revendications 1 à 27, caractérisé en ce que la douille de pointeau (28') est munie d'un collier (42') ajusté avec une légère pression entre la buse d'injection (1') et la plaque adaptatrice afin d'obtenir une bonne conductibilité thermique, objectif pour lequel la douille de pointeau a été réalisée dans un matériau hautement conductible, p. ex. en bérylium de cuivre qui peut être muni d'une couche protectrice pour le cas du traitement de matières plastiques corrosives, ce même collier servant également à centrer correctement la douille de pointeau (28') dans la plaque adaptatrice (8') de sorte que le pointeau est centré avec précision au milieu du canal distributeur (2') et de l'ouverture d'injection (32').

29. Mécanisme selon l'une des revendications 1 à 28, caractérisé en ce que la poutre du canal d'alimentation à chaud (25') est munie d'un alésage de centrage (44') en vue du bon centrage de la plaque adaptatrice (8') et de l'assemblage (36') dans lequel est fixée la soupape à pointeau (27').

30. Mécanisme selon la revendication 29, caractérisé en ce que l'assemblage (36') comprend une soupape à pointeau (27') (figs. 1 à 6) commandée pneumatiquement et que la plaque adaptatrice (8') et l'assemblage (36') sont munis d'épaules de centrage de memes dimensions ainsi que de boulons (38').

31. Mécanisme selon l'une des revendications 1 à 30, caractérisé par des soupapes à pointeau (27') fixes, réglables de préférence à partir de l'extérieur ou par des soupapes à pointeau (27') réglables et par le meme nombre d'orifices d'injection (11', 34', 37').

32. Mécanisme selon l'une des revenditions 1 à 31, caractérisé par des anneaux de centrage séparés (40') sur les orifices d'injection (3') destinés à aligner la buse d'injection (45'), à remplir l'espace vide (41') et à étanchéifier les ouvertures d'injection (3') et la plaque de fermeture de la cavité (26').

Fig.1

Fig. 2

# Fig.3

0 021 273

Fig.4

46

Fig.5

46

# Fig.6

Fig.1'

Fig. 2'

Fig. 3'

Fig. 4'

**Fig. 5'**

**0 021 273**

# Fig. 6'

# Fig. 7'